# EUROPÄISCHE PATENTSCHRIFT

(11) **EP 2 350 757 B1**
(45) Veröffentlichungstag und Bekanntmachung des Hinweises auf die Patenterteilung: **20.07.2016**
(21) Anmeldenummer: 09756429.8
(22) Anmeldetag: 13.11.2009
(51) Int. Cl.: G05B 23/02

(54) **SYSTEM UND VERFAHREN ZUR OPTIMIERTEN ENTSCHEIDUNGSFINDUNG BEI WASSERVERSORGUNGSNETZEN UND/ODER WASSERVERSORGUNGSBETRIEBEN**
SYSTEM AND METHOD FOR TAKING OPTIMIZED DECISIONS FOR WATER SUPPLY NETWORKS AND/OR WATER UTILITIES
SYSTÈME ET PROCÉDÉ DE PRISE DE DECISION OPTIMISEE POUR UN RESEAU D'ALIMENTATION EN EAU POTABLE ET/OU UN ENTREPRISE DE DISTRIBUTION D'EAU

(30) Priorität: 14.11.2008 DE 102008057442
(43) Veröffentlichungstag der Anmeldung: 03.08.2011
(73) Patentinhaber: ABB Technology AG, 8050 Zürich (CH)
(72) Erfinder: BLANK, Frederik, 69121 Heidelberg (DE); GAUDER, Markus, 68766 Hockenheim (DE); SCHREYER, Heinrich-Martin, 64646 Heppenheim (DE); LAUXTERMANN, Stefan, 32457 Porta Westfalica (DE)
(74) Vertreter: Kock, Ina
(86) Internationale Anmeldenummer: PCT/EP2009/008083
(87) Internationale Veröffentlichungsnummer: WO 2010/054825

(56) Entgegenhaltungen:
- EP-A2- 1 324 165
- DE-U1-202005 005 491
- GB-A- 2 405 514
- US-A1- 2006 117 295

## Beschreibung

Die Erfindung betrifft ein System und ein Verfahren zur Bestimmung und/oder Verarbeitung von Zustandsinformationen betreffend ein Wasserversorgungsnetz und/oder einen Wasserversorgungsbetrieb, welches insbesondere zur optimierten Entscheidungsfindung beim Betrieb und der Instandhaltung von Einrichtungen zur Wasserproduktion und/oder Wasserverteilung eingesetzt wird.

Der Betrieb und die Instandhaltung von Netzen zum Transport und Verteilung von Wasser sind verbunden mit dem Fällen vergleichsweise komplexer Entscheidungen. Von diesen Entscheidungen hängen Effektivität und Effizient des Betriebs und der Instandhaltung der Netze ab. Der Komplexitätsgrad ergibt sich aus einer Vielzahl von Aspekten, beispielsweise technische, kommerzielle oder rechtliche Aspekte, und Abhängigkeiten, die durch die jeweilige Entscheidung beeinflußt werden können beziehungsweise einer Entscheidung zugrunde gelegt werden können. Entscheidungen können zusätzlich auch noch unterschiedliche Zeithorizonte berücksichtigen, was ebenfalls den Komplexitätsgrad erhöht. Das Treffen von Entscheidungen bezieht sich auf die Festlegung und Priorisierung von Maßnahmen zur Aufrechterhaltung beziehungsweise der Verbesserung des Betriebs der Wassernetze (operative Aspekte) wie beispielsweise der Einsatzplanung von Pumpstationen sowie der Priorisierung, Planung und Durchführung von Instandhaltungsmaßnahmen, wie z.B. notwendigen Reparaturen zur kurzfristigen Behebung von Leckagen.

Zur Unterstützung der Entscheidungsfindung durch das Management, Bediener oder Instandhalter werden gängigerweise verschiedene software-basierte Systeme und/oder Anwendungen eingesetzt, die unterschiedliche Funktionalitäten bieten und somit lediglich Teilaspekte des Entscheidungsfindungsprozesses abbilden. Gründe für die Vielzahl an Systemen und/oder Anwendungen sind zum einen fehlende, am Markt nicht verfügbare umfassende Systeme zur Entscheidungsunterstützung, zum anderen aber auch die historische Entwicklung bei den Wasserversorgern, insbesondere im Hinblick auf Eigenentwicklungen von computergestützten und/oder software-basierten Systemen und/oder Anwendungen.

Solche individuellen Systeme und/oder Anwendungen umfassen zum Beispiel die Bereiche der Einsatzplanung von Pumpstationen, des Druckmanagements oder der Instandhaltungsplanung basierend auf - häufig geschätzten und/oder angenommenen - Informationen über den aktuellen Zustand (Istzustand) des Netzes.

Ein individuelles System zur Analyse und Optimierung des Betriebes und der Auslastung eines Wasserversorgungssystems ist aus der DE 20 2005 005 491 U1 bekannt. Zunächst erstellt eine Verarbeitungseinheit auf Basis von zwei in einem Datenspeicher abgelegten Datenmodulen ein Anlagenmodell, welches Anlagekomponenten aufweist, wobei das erste Modul ein hydraulisches Modell und ein Zeitmodell des Wasserversorgungssystems und das zweite Modul die Daten zu Anlagekomponenten und deren technischen Parametern enthalten. Anschließend ermittelt die Verarbeitungseinheit aus den im dritten Modul enthaltenen Kostenparametern der Anlagekomponenten entsprechend den Zeiten des Tagesmodells die zeitabhängigen einzelnen Kosten der Anlagekomponenten und der daraus resultierenden Kosten des Wasserversorgungssystems.

Ein anderes individuelles System ist in der EP 1 324 165 A2 beschrieben, die ein automatisches Verfahren offenbart zur Ermittlung eines optimalen Managementkriteriums zur Steuerung eines industriellen Systems, insbesondere eines Wasserversorgungsnetzes, mittels eines Ökosystem-Modells und basierend auf Fuzzy-Regeln.

Solche Systeme und/oder Anwendungen nutzen im Allgemeinen unterschiedliche Datensätze und Datenbanken als Quelle und zur Ablage von Daten, was letztlich eine verringerte Effizienz bedeutet, da eine durchgängige systematische Nutzung neuer Integrationskonzepte nicht vorgesehen und/oder anwendbar ist.

Die Nutzung unterschiedlicher Systemen und/oder Anwendungen mit individuellen Funktionalitäten als sogenannte "standalone" Systeme (Inselsysteme) und/oder Anwendungen erfordert stets einen Wechsel zwischen den Systemen und/oder Anwendungen sowie eine Bereitstellung jeweilig notwendiger Informationen und Daten, insbesondere mit auf das jeweilige System oder die jeweiligen Anwendung angepasster Struktur und/oder Datenformat, um ein System und/oder eine Anwendung unter Nutzung von Ergebnissen aus weiteren genutzten Systemen und/oder Anwendungen einzusetzen beziehungsweise nutzen zu können.

So können z.B. Ergebnisse aus den Berechnungen zum Druckmanagement nicht ohne zusätzlichen Aufwand für die Verwendung in der Einsatzplanung eingesetzt werden.

Zudem basiert, wie bereits angedeutet, die Entscheidungsfindung auf unterschiedlichen Datenquellen, wie insbesondere auf historischen und/oder anwendungsspezifischen Datenbanken, die bisher aufgrund fehlender Integration in ein Gesamtsystem als standalone Datenbanken / Systeme betrieben werden. Das Zusammenfügen von Informationen aus den verschiedenen standalone Datenbanken stellt nicht nur einen erheblichen zeitlichen Mehraufwand dar, sondern durch das manuelle Suchen von Informationen können wichtige Datensätze übersehen werden, so dass sich das Fehlerrisiko erhöht.

Zur effektiveren und effizienten Entscheidungsfindung für den Bereich der Wasserverteilung und/oder des Wassertransport ist der Einsatz eines umfassenden und integrativen Ansatzes von entscheidender Bedeutung. Dieser Ansatz bietet die Einbindung in das Leitsystemumfeld, wodurch im Rahmen der Entscheidungsfindung neben historischen, strukturellen, Simulations-, Topologie-, Netz-, Instandhaltungs- und weiteren Daten auch Echtzeitdaten, die den aktuellen Zustand des Netzes widerspiegeln, genutzt werden können. Die Einbindung von Systemen und/oder Anwendungen über standardisierte Schnittstellen ermöglicht die zentrale Datenhaltung, Datenverwaltung sowie zur Verfügungstellung benötigter Daten und Informationen als elementare Grundlage der Entscheidungsfindung und Planungsunterstützung. Notwendige Entscheidungen betreffen den Betrieb, die Planung sowie die Instandhaltung von Wassernetzen (Transport und Verteilung). Insbesondere Entscheidungen, die die Instandhaltung betreffen, können taktische, kurzfristige Maßnahmen wie z.B. die Festlegung von notwendigen Reparaturmaßnahmen, aber auch längerfristige strategische Maßnahmen wie den Aus- oder Neubau oder die Sanierung von Rohrleitungsnetzen adressieren. Durch den integrativen Ansatz könnte der Komplexitätsgrad für den jeweiligen Entscheider entsprechend reduziert werden.

Aus heutiger Sicht gibt es nachteilig jedoch weder umfassende, integrierte Systeme zur Unterstützung der Entscheidungsfindung noch - hinsichtlich der Funktionalität eines solchen Systems - eine einheitliche Umschreibung, d.h. dass bei den Wasserversorgem unterschiedliche Systeme und/oder Anwendungen in unterschiedlichen Ausprägungen zum Einsatz kommen. Hierbei ist zu berücksichtigen, dass Systeme und/oder Anwendungen bekannt sind, die typischerweise im Rahmen von Entscheidungsfindungen genutzt werden, aber meist nur Insellösungen darstellen, die gerade nicht auf eine vollständig integrierte Datenbasis zurückgreifen können und somit nur Teilaspekte bei der Entscheidung berücksichtigen oder nur in bestimmten Bereichen eingesetzt werden können.

Aus der US 2006/0117295 A1 ist eine generische Systemarchitektur für eine Automatisierungsplattform bekannt zur Integration von Informationsmanagement, Zustandsüberwachung und Echtzeitsteuerung eines verteilten Industriesystems. Zu diesem Zweck ist eine Vielzahl so genannter Software-Agenten vorgesehen zur Implementierung spezifischer Funktionen, wobei die Software-Agenten von einem Agenten-Management-System aus verwaltet werden. Ein Software-Agent ist dabei ein Programm, welches Änderungen in seiner Umgebung erkennen und darauf in autonomer Weise reagieren kann. In dem verteilten Industriesystem werden mittels intelligentes elektronischer Geräte (IED) oder einem Leitsystem Informationen einer Anlage gesammelt. Diese Informationen werden mittels Geräte-Agenten und Leitsystem-Agenten anderen Systemen zur Verfügung gestellt. Zusätzliche Informationen werden von Datenbank- und Dokumenten-Agenten geliefert. Die Agenten können miteinander kommunizieren sowie Dienste anderer Agenten nutzen.

Für die Erfindung ergibt sich die Aufgabe, eine Möglichkeit für eine verbesserte und effiziente Entscheidungsfindung bei einem Wasserversorgungsnetz anzugeben.

Diese Aufgabe wird durch ein System mit den Merkmalen des Anspruchs 1 gelöst.

Vorteilhafte Ausgestaltungen und Weiterbildungen des Systems sind in weiteren Ansprüchen und der nachfolgenden Beschreibung angegeben.

Die Erfindung stellt dabei den integrativen Ansatz in den Vordergrund und beschreibt Funktionen, die zum optimierten Betrieb und der Instandhaltung sowie Unterhaltung von Wassernetzen benötigt werden.

Eine Integrationseinrichtung agiert dabei als Verbindung beziehungsweise verknüpfende Schnittstelle zwischen dem Prozess, der Planung und der Instandhaltung sowie der für den Betrieb notwendigen Funktionseinheiten sowie deren Funktionalitäten, welche Funktionalitäten in aller Regel mittels aufrufbarer und auf diesen ausführbarer Anwendungen nutzbar und/oder anwendbar sind.

Die Integration verschiedener Anwendungen und/oder Funktionseinheiten ermöglicht nicht nur große Vereinfachungen bei der Entscheidungsunterstützung, sondern mit diesem Ansatz können integrierte Anwendungen nun auch auf eine Vielfalt von Daten anderer integrierter Anwendungen und Module zugreifen. Somit kann unter anderem die Prozesssteuerung und -planung auch unter Berücksichtigung globaler Aspekte statt wie bisher rein lokaler Aspekte verbessert werden.

Das System ist modular aufgebaut, was eine maximale Flexibilität und Anwendungsvielfalt erlaubt.

Weiter ist vorsehbar, dass Anwendungen und Funktionseinheiten über Standardschnittstellen angebunden sind und/oder kommunizieren, wobei alternativ auch die Nutzung proprietärer Schnittstellen ermöglicht ist.

Ein Zugriff auf die Anwendungen und Funktionalitäten aus der Integrationseinrichtung heraus kann dabei auf mehrere Wege und/oder Arten erfolgen.

Es ist eine Visualisierungseinheit vorgesehen, welche mit der jeweiligen Anwendung kommuniziert, die systemgemäß parallel im Hintergrund ausgeführt wird, und Vorgaben des jeweiligen Benutzers an die Anwendung und Antworten und/oder Ergebnisse beziehungsweise Resultate der jeweiligen Anwendung an den Anwender weiterleitet beziehungsweise übermittelt.

In vorteilhafter Ausprägung verfügt die Integrationseinrichtung über eine Integrationseinheit über welche die Bedienoberflächen beziehungsweise Bedienelemente der verschiedenen Funktionseinheiten und Anwendungen einbindbar und zugreifbar sind, so dass eine direkte Sicht auf die jeweilige Anwendung und/oder Funktionseinheit aus der Integrationseinrichtung heraus möglich ist und direkt in der jeweiligen Anwendung und/oder Funktionseinheit gearbeitet werden kann.

Bei der Integration von Funktionseinheiten und Funktionalitäten beziehungsweise diesbezüglicher Anwendungen ist bezüglich der Tiefe der Integration zu unterschieden. So kann eine Funktionseinheit und/oder deren Anwendung über einen reinen Datentransfer eingebunden werden ebenso wie über die Oberflächen- oder Bedienelementeintegration, wobei hier grundlegend zu unterscheiden ist zwischen dem reinen Aufruf einer Oberfläche oder eines Elementes und der direkten Navigation auf ein Objekt innerhalb der jeweiligen Anwendung und/oder Funktionseinheit.

Weiterhin ist vorgesehen, dass im Fall des Datentransfers und/oder Informationsaustauschs auch auf die Funktionalität einer Visualisierungseinheit zurückgegriffen wird.

Für einen effektiven und effizienten Betrieb von Wasserversorgungsnetzen, insbesondere Verteilung aber auch Transport, ist vorteilhaft eine Reihe von Funktionseinheiten sowie zugehöriger Anwendungen aus dem Bereich Druckmanagement vorgesehen. Darüber hinaus sind Funktionseinheitenaus den Bereichen Energiemanagement, Leckagemanagement, Instandhaltungsmanagement sowie Entscheidungsunterstützung vorsehbar.

Aufgrund der relevanten Abhängigkeit des Leckageaufkommens und des Energieverbrauchs von Druck im Wasserversorgungsnetz sind bezogene Elemente in einem integrierten Ansatz umzusetzen.

Das beanspruchte System kombiniert das Leitsystem sowie die vorgenannten Einheiten zu einem Gesamtsystem und erweitert diese wechselseitig um zusätzliche Funktionen und/oder Funktionalitäten. Jede Funktionalität ist dabei Teil einer Funktionseinheit, die basierend auf Standards, im ständigen Austausch mit dem übergeordneten Leitsystem und damit auch mit anderen Funktionsmodulen ist.

Nur in Zusammenschau beziehungsweise unter Berücksichtigung aller Funktionseinheiten beziehungsweise der durch sie ermittelten und bereitgestellten Informationen, insbesondere Zustandsinformationen, lassen sich optimale Ergebnisse bei Schätzungen, Entscheidungen, Planung und Instandhaltung erzeugen beziehungsweise bewirken.

Die adressierten Funktionen erlauben ein umfassendes Management und den Betrieb eines Wassernetzes.

Es ist eine Planungseinheit vorgesehen zur Einsatzplanung und Steuerung (Planning & Scheduling) von insbesondere Pumpstationen zur optimalen und energiesparenden Ansteuerung von Pumpen (Planning & Schedu-ling-Modul).

Auch ist eine Schätzeinheit zur Abschätzung des zukünftigen Wasserbedarfs mittels Modellbildung (Wasserverbrauch-Prognose-Modell) vorgesehen.

Daneben ist eine Alarm-Managementeinheit für Alarm-Management Fehlerlisten und Visualisierung der Alarme (Alarm-Management-Modul) im System vorgesehen.

Die Visualisierungseinheit beinhaltet die Funktion zur Darstellung u.a. geographischer Daten.

In einer vorteilhaften Ausführungsform ist wenigstens eine Steuereinheit zur optimierten Ansteuerung von Druckregelventilen (Druck-Regelungs-Modul) vorgesehen.

Weiterhin ist eine Verarbeitungseinheit zur Bestimmung der Wasserverteilung im Wasserversorgungsnetz durch mathematisch-physikalische Modellbildung (Wasserverteilungs-Modell) vorsehbar.

Auch eine Vorhersageeinheit zur Vorhersage und/oder Erkennung und/oder Charakterisierung, Lokalisierung und Visualisierung von Leckagen und Rohrbrüchen (Lekkageeinheit) ist vorteilhaft vorsehbar.

In einer weiteren Ausgestaltungsvariante ist eine Einheit beziehungsweise Funktionseinheit zur Entscheidungs-Unterstützung bei der Instandhaltung und Investitionsplanung des Wasserversorgungsnetzes und -materials und/oder diesbezüglicher Betriebsmittel vorgesehen.

Weiterhin ist auch eine Fehlerkorrektureinheit zum automatischen Eingreifen und Ausführen von erforderlichen und/oder sicherheitskritischen Aktionen und/oder Maßnahmen (Fehlerbehebungs-Einheit) vorgesehen.

Weiterbildend kann auch eine Simulationseinheit zur Simulation von verschiedenen Szenarien (Szenario-Management-Einheit) vorgesehen sein.

Weitere Einheiten die vorteilhaft, auch in Kombination, einsetzbar sind, sind die Instandhaltungseinheit, Einheit zur Verwundbarkeitsanalyse und -management.

Die weitere Darlegung und Erläuterung der Erfindung sowie vorteilhafter Ausgestaltungen und Weiterbildungen erfolgt anhand einiger Figuren und Ausführungsbeispiele.

Es zeigen
Figur 1 beispielhaft ausgebildetes erfindungsgemäßes System
Figur 2 beispielhaft ausgebildetes erfindungsgemäßes System mit über die Integrationseinrichtung in das Leitsystem eingebundenen und/oder integrierten leitsystemexternen Funktionseinheiten.

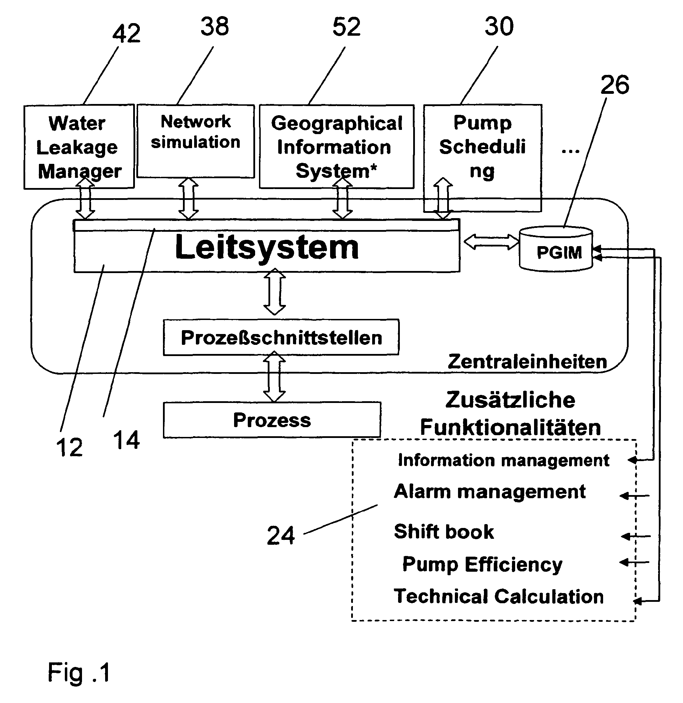

In Fig. 1 ist ein beispielhaft ausgebildetes System zur optimierten Entscheidungsfindung bei Wasserversorgungsnetzen und/oder Wasserversorgungsbetrieben mit wenigstens einer zentralen Datenverarbeitungseinrichtung und einem Leitsystem 12 mit wenigstens einer Integrationseinrichtung 14, sowie wenigstens einer Funktionseinheit, im hier gezeigten Beispiel vier Funktionseinheiten zur Bestimmung und/oder Verarbeitung von Zustandsinformationen das jeweilige Netz oder den Betrieb betreffend gezeigt. Mittels der Integrationseinrichtung 14 wird eine Integration und/oder Einbindung der Funktionalitäten 24 und der diesbezüglichen Anwendung der jeweiligen Funktionseinheiten in das Leitsystem 12 bewirkt, derart, dass die Leitsystemfunktionalität um die Funktionalität der jeweiligen Funktionseinheit erweitert ist und/oder Leitsystem und die wenigstens eine Funktionseinheit derart zusammenwirken, dass einzelne Funktionen und/oder die Funktionalität 24 der jeweiligen Funktionseinheit über die Integrationseinrichtung 14 und/oder das Leitsystem 12 und/oder wenigstens eine weitere Funktionseinheit aufrufbar und/oder ausführbar und/oder nutzbar sind, und resultierend zusätzliche Zustandsinformationen für eine Entscheidungsfindung, insbesondere eine technische Aufgabe oder ein technisches Problem betreffend, gewinnbar und bereitstellbar sind.

Vorteilhaft ist vorsehbar, dass einige der Leitsystemfunktionen bei Bedarf nach der Integration auch in einzelnen Funktionsmodulen zur Verfügung gestellt werden und/oder vorhanden sind.

Darüber hinaus ist ein Informationsmanagementsystem 26 vorgesehen, welches im Zusammenwirken mit Integrationseinrichtung 14, Leitsystem 12 und Funktionseinheiten als zentrale Informations- und/oder Datenbasis agiert und dient und/oder über welches ein kontinuierlicher Informationsfluss und/oder -austausch zwischen Leitsystem und Funktionseinheiten bewirkbar und/oder sicherbar ist.

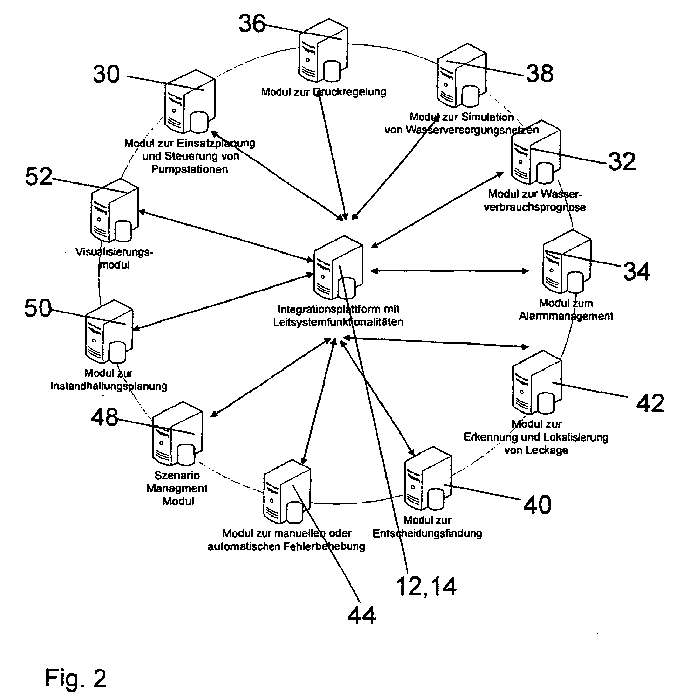

Verschieden vorsehbare beziehungsweise in das Leitsystem einbindbare Funktionseinheiten sind in beispielhafter Auswahl, die keinesfalls abschließend ist, auch in Fig. 2 angegeben.

Die vorgesehene Planungseinheit 30 hat dabei die Aufgabe, die Pumpen, die zur Erzeugung des Durchflusses und Drucks im Wasserversorgungsnetz zum Einsatz kommen, optimal anzusteuern. Hierbei werden als Optimierungsgrößen die eingesetzte Energie, die Betriebskosten, die Anzahl der benötigten Pumpen und die Druckregelventilöffnungen verwendet.

Die Vorhersageeinheit 32 liefert eine örtlich aufgelöste, beispielsweise eine auf GIS-Informationen basierte Schätzung des zukünftigen Wasserverbrauchs im Wasserversorgungsnetzwerk, die als Basis für das Optimierungsverfahren beziehungsweise den Optimierungsprozess und insbesondere den zu Grunde liegenden Optimierungsalgorithmus dient.

Eine weitere Eingangsgröße für die Einsatzplanung ist das Ergebnis des Wasserverteilungsmodells beziehungsweise eines hydraulischen Wassernetzwerkmodells, das die Verteilung des Wassers und/oder der Flüsse und Drucks im Versorgungsnetzes unter Berücksichtigung der Positionen der Druckregelventile und des geschätzten Wasserverbrauchs bestimmt beziehungsweise ermittelt. Diese Informationen dienen als Grundlage für eine mögliche sich anschließende Optimierung des Einsatzes von Pumpen beziehungsweise des Pumpeneinsatzes sowie der damit verbundenen Pumpenkosten, indem optimale beziehungsweise optimierte Pumpenfahrpläne unter Berücksichtigung möglicher Stromtarife, Reservoir-Füllstände und Mindestdruckanforderungen berechnet und angewendet werden.

Neben den Pumpen können auch Reservoire, die mittels Pumpen befüllt werden eine wichtige Rolle spielen (geodätische Höhe).

Liefert die Alarm-Management-Einheit 34 Störungsmeldungen von Pumpen, Ventilen oder meldet eine Leckage in einem Leitungsabschnitt oder einem Netzabschnitt, können diese im Wasserverteilungsmodell und im Pumpenansteuerungs-Optimierungs-Algorithmus berücksichtigt und entsprechend darauf reagiert werden. Defekte Pumpen werden nicht mehr angesteuert, Gebiete, in denen ein defektes Druckregelventil vorhanden ist, insbesondere dann wenn das Ventil geschlossen oder zu und nicht mehr steuerbar ist, müssen mit einer anderen Strategie versorgt werden als zuvor und große Drücke in Leitungen mit Leckagen müssen, ebenso wie zusätzliche oder weitere Leckagen, vermieden werden.

Weichen die geschätzten Wasserverbrauchswerte von den realen Wasserverbrauchswerten etwas, insbesondere über einen vorgegeben Grenzbereich hinaus, ab, so erfolgt durch eine globale (gesamtsystemische) Regelung der Drehzahl der laufenden Pumpen und der Stellung der Druck-Regelungs-Ventile eine automatische Anpassung an die momentan Situation. Bei zu großen Abweichungen von geschätztem und realem Wasserverbrauch wird das Optimierungsverfahren beziehungsweise der zu Grunde liegende Optimierungsalgorithmus, der insbesondere mindestens einmal täglich auszuführen ist, neu gestartet unter Berücksichtigung der aktuellen Situation. Zur Bestimmung der Einsatzplanung wird ein hydraulisches Netzmodell verwendet, in dem das betrachtete Wasserversorgungsnetz entsprechend modelliert ist. Wichtig ist zu berücksichtigen, dass für die Bestimmung der optimalen Einsatzplanung die Durchführung einer Optimierungsrechnung notwendig ist und somit das Modell als Optimierungsmodell entwickelt werden muss. Ein entsprechender Solver beziehungsweise Löser führt die Lösung des Optimierungsproblems herbei. Die entsprechenden Randbedingungen werden im Rahmen der Konfiguration des Modells festgelegt. Das Modell ist unter Verwendung von Modellbibliotheken, die unter anderem Einzelmodelle für Leitungen, Druckregelventile, Verbraucher und Quellen beinhalten können, aufstellbar beziehungsweise erstellbar.

Grundlage für die Optimierung ist ein Optimierungsmodell, das automatisiert basierend auf dem Simulationsmodell generiert wird. Dem Optimierungsmodell werden dann die notwendigen betrieblichen und physikalischen Randbedingungen hinzugefügt.

Die Erfassung und/oder Modellbildung ist vorteilhaft grafisch oder textuell durchführbar. Die benötigten Daten oder Informationen können beispielsweise über das Informationsmanagementsystem 26, das eine gemeinsame Datenbasis für die integrierten Anwendungen, Funktionalitäten 24 und Funktionseinheiten bildet beziehungsweise bereitstellt, der Einsatzplanungseinheit beziehungsweise Planungseinheit 30 zur Verfügung gestellt und/oder abrufbar bereitgestellt werden.

In vorteilhafter Ausgestaltung sind die Datenschnittstellen als Standardschnittstellen, insbesondere OPC basiert, ausbildbar, wobei der Aufruf und/oder die Ausführung der jeweiligen Funktionseinheit, Funktionalität und/oder Anwendung entweder ereignisgesteuert erfolgen, das heißt automatisch im Fall einer eintretenden Änderungen im Netzzustand, wie beispielsweise dem Ausfall einer Pumpe, oder zeitbasiert, d.h. automatisch gemäß entsprechend festgelegter Zeitzyklen, oder manuell mittels Anweisung durch das Bedienpersonal erfolgen.

Weiterhin ist vorsehbar, dass der Zeitraum, der für die Einsatzplanung in Betracht gezogen werden soll, entsprechend der Konfiguration der jeweiligen Funktionseinheit festgelegt wird und beispielsweise einen Zeitraum von 24 Stunden umfassen kann, so dass eine entsprechende vorausschauende Einplanung möglich ist. Auch die Zeitschritte, für die jeweils die Betriebspunkte der Pumpen festgelegt werden, sind vorteilhaft entsprechend und/oder darauf angepasst konfigurierbar. Ein typischer Zeitschritt beträgt beispielhaft 15 min.

Die Ergebnisse der Einsatzplanung sind als entsprechende Zeitreihen, beispielsweise über eine dafür vorgesehene und eingerichtete Standardschnittstelle wie OPC, an das Informationsmanagementsystem übertragbar und dort speicherbar.

In einer weiteren Ausgestaltung ist wenigstens eine Druckregelungseinheit 36 vorgesehen, welche insbesondere regelbasiert und/oder anhand von Sensorinformationen und/oder Mess- sowie Kennwerten optimale Druckverhältnisse im Wasserversorgungsnetz bewirkt. Demgemäß wird anhand eines vorbestimmten, optimierten Pumpenfahrplans, der insbesondere als Ergebnis der Einsatzplanung in Form einer Zeitreihe über das Informationsmanagement bereitgestellt ist, und/oder des geschätzten Wasserbedarfs und/oder des vorherrschenden Drucks für jedes Druckregelventil ein unter globalen Energie- und Kostengesichtspunkten optimierter Öffnungs-Sollwert ermittelt und/oder berechnet.

Dieser global - gesamtsystemisch, das heißt unter Berücksichtigung des gesamten Systems - ermittelte Wert kann dann je nach aktuellem Wasserbedarf durch eine vorsehbare lokale Ventilöffnungs-Echtzeit-Regelung angepasst werden. Als Grundlage für die Bestimmung ist ein Netzmodell verwendbar, mit dessen Hilfe die notwendigen hydraulischen Parameter, wie beispielsweise wann welches Ventil wo in welcher Stellung wie lange geöffnet wird, ermittelt und bestimmt werden.

Wie im Fall der Einsatzplanung ist das jeweilige Modell als Optimierungsmodell vorsehbar, wobei die jeweiligen Randbedingungen im Rahmen der Konfiguration des jeweiligen Modells festgelegt werden. Das Modell lässt sich unter Verwendung von Modellbibliotheken, die unter anderem Einzelmodelle für Leitungen, Druckregelventile, Verbraucher und Quellen beinhalten können, erstellen und/oder generieren.

Die notwendigen Informationen und Daten sind der Druckregelungseinheit 36 vorteilhaft aus dem Informationsmanagementsystem 26 zum Beispiel über eine Standardschnittstelle wie OPC bereitstellbar.

Die Druckregelung 36 kann dabei den in der Einsatzplanung 30 konfigurierten Zeitschritten folgen (z.B. 15 min) und auch für einen entsprechenden Zeitraum - wie in der Einsatzplanung betrachtet - ausgeführt werden. Die Ergebnisse werden entsprechend im Informationsmanagementsystem 26 zentral gespeichert und stehen somit auch weiteren Anwendungen und/oder Funktionseinheiten zur Verfügung, zum Beispiel zur Übertragung auf die jeweiligen Aktuatoren.

In vorteilhafter Ausgestaltung ist wenigstens eine Simulationseinheit 38 vorgesehen, welche ein anhand mathematisch-physikalisch basierter Regeln beschriebenes Modell des Wasserversorgungsnetzes ausbildet beziehungsweise generiert und/oder zur Verfügung stellt. Mit Hilfe dieses Modells kann in Abhängigkeit von der aktuellen Wasserzufuhr (Durchfluss, Druck) und dem aktuellen oder geschätzten Wasserverbrauch an den einzelnen Knotenpunkten der theoretische, beziehungsweise theoretisch zu erwartende Druck und Durchfluss im Wasserversorgungsnetz bestimmt und/oder vorhergesagt werden, zusätzlich zu weitergehenden Informationen, wie Durchflussgeschwindigkeiten.

Zudem ermöglicht das Modell bei bekanntem oder geschätztem Wasserverbrauch, bekannter oder simulierter Druckverteilung im Wasserversorgungssystem und bekannten Sollpositionen der Druckregelventile eine Bestimmung der notwendigen Wasserzufuhr. Mit Hilfe dieses Modells lassen sich alle erdenklichen Situationen, die von der Planning-Scheduling-Einheit 30 zur Pumpen- und Druckregelventiloptimierung oder vom Szenario-Manager benötigt werden, simulieren.

Je nach Qualität und Güte des Modells können aufgrund der Integration in das Leitsystem 12 bestätigte Fehlermeldungen aus der Alarm-Managementeinheit (wie Leckage, Rohrbruch, defekte Pumpe oder Druckregelventil) in das Modell automatisch eingearbeitet werden, so dass immer ein realitätsnahes Modell zur Verfügung steht. Auch dieses Modell lässt sich unter Verwendung von Modellbibliotheken erstellen.

Die Simulation kann entweder ereignisgesteuert, d.h. im Fall des Auftretens einer Veränderung im Netzzustand, oder zeitgesteuert, d.h. entsprechend festgelegter Zeitzyklen, oder manuell angestoßen werden. Der Zeitbereich sowie die Zeitschritte, für die die Berechnung ausgeführt werden soll, werden entsprechend in der Konfiguration festgelegt. Z.B. kann die Simulation für einen Zeitraum der nächsten 24 Stunden in 15 Minuten Zeitschritten erfolgen. Wichtige Daten, die aus dem Informationsmanagementsystem 26 zur Verfügung gestellt werden müssen, sind die aktuellen Prozessdaten, wie beispielsweise Drücke und/oder Flüsse, historische Daten, beispielsweise Drücke und Flüsse über einen Zeitraum der beispielsweise letzten Woche, und die aktuellen Einstellungen der System- beziehungsweise Netzkomponenten wie Pumpen und Ventile. Auch Prognosedaten können für die Verwendung in einem Simulationsmodell zum Einsatz kommen, wenn über einen Zeitraum der in der Zukunft liegt, simuliert werden soll. Abhängig davon, ob das Simulationsmodell online, d.h. unter Berücksichtigung der aktuellen Prozessdaten, oder offline, d.h. unter Berücksichtigung historischer Daten, betrieben werden soll, sind die Anforderungen an die Verfügbarkeit von Daten unterschiedlich.

Um den geeigneten Druck im Wasserversorgungsnetz unter energie- und kostenoptimalen Gesichtspunkten einstellen zu können, wird in einer weiteren Ausführungsform der zukünftige globale und örtlich verteilte Wasserverbrauch mittels Vorhersageeinheit 32 geschätzt, wobei unter Verwendung von aktuellen und historischen Durchfluss- und Druckdaten im Versorgungsnetz und GIS-Informationen ein örtlich aufgelöstes Modell zur Prognose des Wasserverbrauchs erstellbar ist, welches sich immer wieder selbst aktualisiert und der Situation anpasst. Zur Verfeinerung und besseren Abschätzung des Wasserverbrauchs, können zusätzlich zu den Durchflussdaten auch noch Wetterdaten und/oder Produktionsplanungsdaten von Großbetrieben in das Modell integriert werden.

Um Fehler im System schnellstmöglich erkennen zu können, sendet in einer weiteren Ausgestaltung eine Alarmmanagementeinheit 34 die aufbereiteten Fehlermeldungen an den Operator oder den jeweiligen Verantwortlichen weiter. Die Fehler werden in der Art aufbereitet, dass sie nach Schwere und Art klassifiziert werden. Zudem werden nur die Fehlerursachen und nicht die mit dem Fehler zusammenhängenden Folgefehler, die den Operator mit Information überfluten würden, angezeigt. Diese Regel wird nur dann außer Kraft gesetzt, wenn es sich um einen sicherheitskritischen Folgefehler handelt. Je nach Fehlertyp können die Fehler als Textmeldung oder grafisch dargestellt werden.

Die angezeigten Alarme können neben den Alarmen, die aus dem Feld z.B. einem Controller an das Leitsystem 12 weitergeleitet werden, zusätzliche Alarme, die aus einzelnen Modulen heraus erzeugt werden, umfassen. Als Beispiel hierfür kann die Überwachung von Simulationsergebnissen angeführt werden - die Simulationsergebnisse für Objekte werden mit den für diese Objekte festgelegten Alarmgrenzen verglichen und im Fall der Verletzung einer solchen Grenze wird ein spezieller Alarm in einer leitsystembasierten Alarmliste erzeugt.

In einer weiteren Ausgestaltung ist eine Entscheidungsunterstützungseinheit 40 vorgesehen, da in diesem Modul beziehungsweise dieser Einheit eine entsprechende Bewertung der anstehenden Alarme durchgeführt wird und über eine Risikoabschätzung die Relevanz eines Alarms für den Betrieb des Gesamtnetzes bestimmt wird.

Auch ist vorteilhaft eine Leckageeinheit 42 vorsehbar, welche vorhandene und zukünftige beziehungsweise sich anbahnende Leckagen und Rohrbrüche im Wasserversorgungsnetz frühzeitig aufspürt und erkennt und/oder lokalisiert. Dabei werden Verfahren eingesetzt, die die örtlich aufgelösten online-Messwerte wie Druck- und Durchflussverlauf ständig beobachten und bewerten. Kommt es an einer Stelle zu unerwarteten Druck- oder Durchflussschwankungen, werden die direkten und umliegenden online-Signale durch einen intelligenten Algorithmus auf Leckage hin analysiert und eine Entscheidung, ob ein Fehler vorliegt, getroffen. Zur Charakterisierung der Schwere und Lokalisierung des Fehlers kann das Wasserverteilungs-Modell und der Szenario-Manager genutzt werden, wo unter anderem verschiedene Leckage-Szenarien simulierbar sind.

In vorteilhafter Weiterbildung ist eine Entscheidungsfindungseinheit 40 vorsehbar, mit welcher zur Unterstützung der Entscheidungsfindung Entscheidungsvorschläge bei der Instandhaltung und Investitionsplanung des Wasserversorgungsnetzes und-materials und/oder diesbezüglicher Betriebsmittel bewirkt und/oder erarbeitet werden. Ausgehend von Kosten-Informationen aus dem ERP-System, Kundenanfragen, elektronischen Instandhaltungsberichten, Leckage- und Rohrbruch-Kenntnissen aus der Leckageeinheit 42 beziehungsweise Leckage-Detektionseinheit, Lebensdauerberechnungen und zusätzlichen Informationen aus dem Feld sowie Erfahrungswerten, beispielsweise aus einer Wissensmanagementeinheit wie einem elektronischen Betriebstagebuch, können kostenoptimale Instandhaltungs- und Austauschstrategien bestimmt und ermittelt werden.

Die Entscheidungsunterstützungseinheit 40 führt eine risikobasierte Bewertung und/oder Gewichtung und/oder Priorisierung der anstehenden Alarme, die beispielsweise im Informationsmanagementsystem 26 ablegbar sind, durch und ermöglicht somit die Fokussierung auf die für den Betrieb wesentlichen Alarme. Die bewerteten, als relevant oder wichtig erachteten Alarme werden an die Alarmmanagementeinheit 34 weitergegeben.

Auf diesem Weg lässt sich die Zahl der Alarme, die durch das Bedienpersonal zu bearbeiten sind, auf ein Minimum reduzieren. Für diese Alarme werden dann die entsprechenden Maßnahmen bzw. Strategien vorgeschlagen - dies erfolgt regelbasiert und/oder unter Zuhilfenahme von Entscheidungsbäumen, die für die einzelnen Alarmgruppen definiert werden.

Ausgehend von diesen Vorschlägen können Instandhaltungsprioritäten festgelegt und unter Beachtung von Lagerbeständen, vorhandenem Personal, Notfällen, Baugenehmigungen und Einsatzort ein optimaler Instandhaltungsplan erstellt werden.

Das Entscheidungsunterstützungseinheit 40 sowie die diesbezügliche Anwendung läuft kontinuierlich und/oder werden kontinuierlich ausgeführt, wobei die Erarbeitung etwaiger Vorschläge und/oder die Bewertung anstehender Alarme entweder ereignisgesteuert, das heißt, automatisch im Fall des Eintretens einer Veränderung im Netzzustand, oder zeitgesteuert, d.h. entsprechend vorgegebener Zeitzyklen oder manuell durch Handlungsanweisung, insbesondere durch das Bedienpersonal, angestoßen und/oder ausgeführt und/oder durchgeführt wird.

Auch hier sind die jeweiligen Ergebnisse, wie auch die der übrigen Funktionseinheiten, im Informationsmanagementsystem 26 abruf- und zugreifbar speicherbar, wobei ebenfalls Standardschnittstellen wie OPC oder proprietäre Schnittstellen verwendbar oder einsetzbar sind, wie z.B. durch Benutzung beziehungsweise Verwendung von Application Programming Interfaces (API).

Da die Entscheidungsunterstützungseinheit einen zeitpunktbasierten Alarm mit einer entsprechenden Maßnahme vorschlägt, wobei insbesondere das Entscheidungsfindungssystem eine Maßnahme zur Bearbeitung eines Problems vorschlägt, werden hier keine Zeitreihen an das Informationsmanagementsystem 26 übergeben.

Darüber hinaus ist vorteilhaft auch eine Fehlerkompensationseinheit 44 beziehungsweise Fehlerbeseitigungseinheit vorsehbar, welche im Falle im Feld auftretender Probleme oder bei auftretenden Fehlern im System, datenbank- und/oder regelbasiert, insbesondere im Zusammenwirken mit dem Informationsmanagementsystem 26 und/oder der Planning-Scheduling-Einheit 30, einen oder mehrere Lösungswege beziehungsweise Lösungsvorschläge zur Fehlerbehebung und/oder -beseitigung erarbeitet und/oder bereitstellt, wobei im manuellen Modus (Open-Loop-Control) eine Schritt-für-Schritt-Anleitung generiert und/oder bereitgestellt wird, die den jeweiligen Bediener bei der Fehlerbeseitigung unterstützt, oder im Automatik-Modus (Closed-Loop-Control) der jeweilige Fehler durch automatisches Ausführen von Handlungsanweisungen und/oder Befehlen durch das System, insbesondere durch die an das Leitsystem angeschlossene Fehlerkompensation oder das Leitsystem selbst beseitigt wird. Grundsätzlich kann zwischen beiden Modi gewählt werden, wobei die Open-Loop-Control-Funktion für sicherheitskritische beziehungsweise -relevante Fehler nicht selektierbar ist, um insbesondere eine Verzögerung bei der Anlagenabschaltung durch den Benutzer zu verhindern.

Auch ist vorsehbar, dass bei sicherheitskritischen Anwendungen stets eine "Zustimmung" des Bedienpersonals erfolgen sollte.

Der manuelle und automatische Modus sind nicht nur zur Beseitigung und Behebung von Fehler beschränkt, sondern können auch zur Ansteuerung der Pumpen und Druckregelventile verwendet und/oder eingesetzt werden. Im manuellen Modus werden dem Anlagenbediener nur optimale Einstellungsvorschläge durch das Planning-Scheduling-Einheit 30 mitgeteilt, die er dann übernehmen, aber auch verändern kann. Im Automatik-Modus werden diese Werte automatisch übernommen und die jeweilige Anlage automatisch demgemäß betrieben.

Vorteilhaft ist eine Szenarienmanagement-Einheit 48 zur Unterstützung der Durchführung und des Managements von Szenarien vorgesehen, mit welcher verschiedene Szenarien - seien sie real oder fiktiv - simulierbar und/oder realitätsnah nachbildbar sind, wobei Szenarien mit beispielsweise
- verschiedenen aktiven Pumpen,
- Druckregelventilen mit beliebigen Stellungen,
- Befüllungsgrade von Reservoiren,
- Isolation von Netzbereichen,
- einstellbarem und örtlich aufgelöstem Wasserverbrauch und/oder
- möglichen Leckagen in den Rohrleitungen
definierbar und/oder angebbar sind.

Demgemäß sind aktuelle Werte aus dem Wasserversorgungsnetz übernehmbar und/oder gezielt sowie wunsch- und/oder vorstellungsgemäß, insbesondere nach den Vorstellungen eines Anlagenbedieners, anpassbar. Dadurch ist es nicht nur möglich verschiedene Parameterkombinationen simulativ zu testen und/oder zu überprüfen, sondern es können auch mögliche Fehlerfälle und/oder Ursachen, wie beispielsweise Leckagen, simuliert werden. Durch eine enge Verzahnung und/oder Verknüpfung der einzelnen Funktionseinheiten kann auf Wunsch des Benutzers hin, simulativ die korrekte Funktions- und Arbeitsweise des Alarm-Management, Leckage-Detektion, Decision-Support, Open-Loop / Closed Loop-Control und Planning-Scheduling-Einheit überprüft werden.

Grundlage des Szenario-Managers ist das Wasserverteilungs-Modell, das mit Hilfe der vorgegebenen Parameter an den gewünschten Simulationsfall anpassbar ist.

Weiterhin ist eine Instandhaltungsplanungseinheit 50 vorgesehen, mit welcher die Instandhaltung von defekten Komponenten sorgfältig planbar und effizient durchführbar ist. Die Instandhaltungsplanungseinheit 50 hält für jeden Instandhaltungsauftrag eine Vielzahl an Informationen abrufbar bereit, welche von jedem Instandhalter, insbesondere nach getaner Arbeit, anpassbar und/oder vervollständigbar sind. Die Informationen können sowohl von einer stationären Datenverarbeitungseinrichtung, insbesondere vom PC im Instandhaltungsbüro, als auch von einem mobilen Endgerät, wie beispielsweise einem Laptop, PDA, Virtual Reality Brille abgerufen und/oder verarbeitet und/oder angepasst werden. Die gilt auch für Einrichtungen, Hilfsmittel und Anwendungen aus dem Bereich "Augmented Reality" oder Erweiterte Realität.

Bei den Informationen, auf die unter anderem zugegriffen werden kann, handelt es sich beispielsweise um den
- Einsatzort,
- defekte Komponenten, Fehlerart und Schädigungsgrad (Art, Position),
- Funktionsweise der Komponente (Funktions- oder Schaltplan, Leitungsplan, Datenblatt),
- bisherige Arbeiten an dieser Komponente oder an benachbarten Komponenten (Lebensakte),
- Ansprechpartner, Verantwortliche,
- evtl. Bodenbeschaffenheit,
- Bilder vom Einsatzort, Kartendaten,
- Bemerkungen beziehungsweise Anmerkungen und/oder
- Rechnungs- und Auftragsdaten.

Die Instandhaltungsplanungseinheit 50 kann, insbesondere über dafür vorgesehene Schnittstellen, eine Anbindung an ein Computerized Maintenance Management System (CMMS) oder an ein Enterprise Resource Planning (ERP) System oder ein geografisches Informationssystem (GIS) beinhalten und/oder bewirken.

Mittels einer Visualisierungseinheit 52, welche funktionale Möglichkeiten zur Darstellung geographischer Daten und zur Visualisierung verschiedener Zustände des Systems umfasst, sind externe Applikationen und/oder Anwendungen in den Operator Workplace beziehungsweise die Bedienumgebung des Leitsystems 12 integrierbar und visualisierbar. Als Beispiel kann hier das geographische Informationssystem (GIS) angeführt werden, in dem z.B. in entsprechenden Layern Ergebnisse aus der Netzsimulation und/oder Instandhaltungsinformationen und/oder Netzzustände und/oder Positionen von Mitarbeitern und/oder Zonen mit kritischen Zuständen und/oder graphisch aufbereitete Alarminformationen und angegeben und/oder angezeigt werden können.

Ein grundlegender Vorteil des beschriebenen und beanspruchten Systems zeigt sich darin, dass durch die umgesetzte Integration "ein Blick" beziehungsweise eine Sicht auf den Prozess möglich ist. Relevante Informationen stehen in kondensierter Form zur Verfügung, da die unterschiedlichen Funktionen entsprechend in die Gesamtlösung integriert sind. Ein weiterer Vorteil besteht darin, dass externe Applikationen durch die modulare Anwendung über eine Integrationsplattform in das System eingebunden werden können. Hierbei ist hervorzuheben, dass der Datenaustausch über die Integrationseinrichtung erfolgt und die einzelnen Funktionseinheiten beziehungsweise -module nicht direkt miteinander integriert werden müssen, was insbesondere im Hinblick auf die Möglichkeit des Austauschs und die Instandhaltung einzelner Module oder Einheiten erhebliche Vorteile bietet.

Bezüglich des Einsatzes einer solchen integrierten Anwendung lassen sich folgende Vorteile hervorheben:
▪ Die Einbindung einer Einheit zur Unterstützung der Entscheidungsfindung ermöglicht dem Bediener, abhängig von seinem Kenntnisstand bezogen auf die jeweilige Situation, mehr Informationen aus verschiedenen Anwendungen und/oder Funktionseinheiten zu bekommen, ohne dass er das System wechseln muss. Des Weiteren stehen dem Bediener die aktuell jeweils optimalen Handlungsoptionen zur Verfügung, wie z.B. ein optimierter Fahrplan zum Einsatz von Pumpstationen und Druckreduzierungsventilen. Abhängig von der Ausgestaltung kann der Bediener hierbei auf verschiedene Modi zurückgreifen. Neben einer Ausgestaltung als "Open Loop" (schrittweise Anleitung zur Behebung eines Fehlers) ist auch eine Ausgestaltung als "Closed Loop" (automatische Durchführung von notwendigen Aktionen) umsetzbar;
▪ Zeitgewinn durch einheitliche Lösung: Der Bediener muss wichtige Informationen nicht mehr an verschiedenen Stellen aufsuchen, sondern bekommt alle vorhandenen Informationen einheitlich und vollständig präsentiert. Durch die gleichbleibende Oberfläche (Look&Feel) findet sich der Bediener schneller im System zurecht und muss nicht den Umgang mit vielen verschiedenen inkompatiblen Inselsystemen erlernen, wobei vorteilhaft eine Reduzierung der Trainingszeit bewirkt, die Benutzerfreundlichkeit erhöht und/oder Informationen objektbezogen zur Verfügung gestellt werden können;
▪ Einheitlicher Ansatz zum Umgang mit Alarmen und Events: Alarme und Events, die aus dem Prozess (z.B. über einen Controller) erzeugt werden, können ebenso wie Alarme, die aus Berechnungen heraus erzeugt werden, in den Alarm- und Eventlisten dargestellt werden;
▪ Die Einbindung von Anwendungen zur Netzsimulation erlauben es, direkt aus der Bedienungsumgebung notwendige Simulationen (z.B. What-If) zu starten, ohne dass der Betrieb hiervon betroffen wird. Somit können zusätzliche Informationen generiert werden;
▪ Ergebnisse aus unterschiedlichen Anwendungen lassen sich in verschiedenen weiteren Anwendungen visualisieren. So können z.B. auftretende Alarme in integrierten Geographischen Informationssystemen ebenso angezeigt werden, wie in Prozessgrafiken, ist auch eine kombinierte Darstellung räumlicher und zeitlicher Daten in einer Visualisierungsumgebung ermöglicht und/oder bereitgestellt;
▪ Die Korrelation von Daten aus den unterschiedlichen Anwendungen und Quellen ist möglich, so dass Veränderungen im Wasserversorgungsnetz entsprechend frühzeitiger erkannt werden können.

## Patentansprüche

1. System zur Bestimmung und/oder Verarbeitung von Zustandsinformationen betreffend ein Wasserversorgungsnetz mit wenigstens einer zentralen Datenverarbeitungseinrichtung, einem Leitsystem (12), wenigstens einer Integrationseinrichtung (14), einem Informationsmanagementsystem (26), sowie Funktionseinheiten, wobei
∘ die Funktionseinheiten Zustandsinformationen ermitteln und bereitstellen,
• die Integrationseinrichtung (14) eine Integration der Funktionalität der Funktionseinheiten (42, 38, 52, 30...) in das Leitsystem (12) bewirkt derart, dass die Leitsystemfunktionalität um die Funktionalität der jeweiligen Funktionseinheit erweitert ist und ein Zugriff auf einzelne Funktionen und/oder die Funktionalität der Funktionseinheiten aus der Integrationseinrichtung (14) heraus erfolgt, und
• das Informationsmanagementsystem (26) im Zusammenwirken mit Integrationseinrichtung (14), Leitsystem (12) und den Funktionseinheiten (42, 38, 52, 30 ...) als zentrale Datenbasis agiert, indem es einen kontinuierlichen Daten- und Informationsaustausch zwischen Leitsystem und den Funktionseinheiten bewirkt, wobei die Funktionseinheiten auf Daten und Informationen anderer integrierter Funktionseinheiten zugreifen können,
**dadurch gekennzeichnet, dass** zu den Funktionseinheiten gehören:
• eine Einsatzplanungseinheit (30) zur optimalen Ansteuerung von Pumpen, die zur Erzeugung des Durchflusses und Drucks im Wasserversorgungsnetz zum Einsatz kommen,
• eine Vorhersageeinheit (32) zur Lieferung einer örtlich aufgelösten Schätzung des zukünftigen Wasserverbrauchs im Wasserversorgungsnetz,
• eine Alarm-Managementeinheit (34) zur Lieferung von Störungsmeldungen von Pumpen oder Ventilen, oder zum Melden einer Leckage in einem Leitungsabschnitt oder einem Netzabschnitt,
• eine Fehlerkompensationseinheit (44), welche bei auftretenden Fehlern im System datenbank- und/oder regelbasiert, im Zusammenwirken mit der Einsatzplanungseinheit (30), einen oder mehrere Lösungsvorschläge zur Fehlerbehebung bereitstellt, wobei der jeweilige Fehler durch automatisches Ausführen von Befehlen durch die an das Leitsystem (12) angeschlossene Fehlerkompensationseinheit (44) oder das Leitsystem selbst beseitigt wird, und
o eine Visualisierungseinheit (52) umfassend funktionale Möglichkeiten zur Darstellung geographischer Daten und zur Visualisierung verschiedener Zustände des Systems, welche mit der jeweiligen Funktionseinheit und deren Anwendung kommuniziert, Vorgaben eines Benutzers an die Anwendung und Antworten und Ergebnisse der jeweiligen Anwendung an einen Anwender übermittelt, und zeitlich und örtlich aufbereitete Informationen und Daten visualisiert, wobei
• die Schätzung des zukünftigen Wasserverbrauchs als Basis für das Optimierungsverfahren der Einsatzplanungseinheit dient,
• die Störungsmeldungen oder die Meldung einer Leckage im Pumpenansteuerungs-Optimierungs-Algorithmus berücksichtigt werden und entsprechend darauf reagiert wird, indem defekte Pumpen nicht mehr angesteuert werden, Gebiete, in denen ein defektes Druckregelventil vorhanden ist, insbesondere dann wenn das Ventil geschlossen und nicht mehr steuerbar ist, mit einer anderen Strategie versorgt werden als zuvor, und große Drücke in Leitungen mit Leckagen vermieden werden.

2. System nach Anspruch 1, **dadurch gekennzeichnet, dass** mittels der Visualisierungseinheit externe Anwendungen in eine Bedienumgebung des Leitsystems integrierbar sind, wobei in einem Geographischen Informationssystem (GIS) Netzzustände und/oder Zonen mit kritischen Zuständen und/oder graphisch aufbereitete Alarminformationen angezeigt werden können.

3. System nach Anspruch 1 oder 2, **dadurch gekennzeichnet, dass** eine Simulationseinheit (38) vorgesehen ist, welche ein anhand mathematisch-physikalisch basierter Regeln beschriebenes Modell des Wasserversorgungsnetzes zur Verfügung stellt zur Bestimmung und/oder Vorhersage des theoretisch zu erwartenden Drucks und Durchflusses im Wasserversorgungsnetz in Abhängigkeit von der aktuellen Wasserzufuhr und dem aktuellen oder geschätzten Wasserverbrauch an den einzelnen Knotenpunkten, wobei bestätigte Fehlermeldungen aus der Alarm-Managementeinheit (34) in das Modell automatisch eingearbeitet werden.

4. System nach einem der vorherigen Ansprüche, **dadurch gekennzeichnet, dass** ein Modul zur Erkennung und Lokalisierung von Leckage (42) vorgesehen ist, welches sich anbahnende Leckagen und Rohrbrüche im Wasserversorgungsnetz anhand örtlich aufgelöster online-Messwerte frühzeitig erkennt und lokalisiert, wobei zur Charakterisierung der Schwere und zur Lokalisierung des Fehlers ein Wasserverteilungs-Modell und ein Szenario-Manager genutzt werden, mit denen unter anderem verschiedene Leckage-Szenarien simulierbar sind.

5. System nach einem der vorherigen Ansprüche, **dadurch gekennzeichnet, dass** eine Druckregelungseinheit zur Bewirkung optimaler Druckverhältnisse im Wasserversorgungsnetz durch optimierte Ansteuerung von Druckregelventilen ist, wobei die Druckregelungseinheit einen unter Energiegesichtspunkten optimierten Öffnungs-Sollwert ermittelt anhand eines von der Einsatzplanungseinheit vorbestimmten, optimierten Pumpenfahrplans und/oder des geschätzten Wasserbedarfs und/oder eines vorherrschenden Drucks für jedes Druckregelventil.

6. System nach einem der vorherigen Ansprüche, **dadurch gekennzeichnet, dass** eine Entscheidungsunterstützungseinheit (40) vorgesehen ist, welche eine risikobasierte Bewertung und/oder Gewichtung und/oder Priorisierung der anstehenden Alarme durchführt, und die als relevant oder wichtig erachteten Alarme an die Alarm-Managementeinheit (34) weitergibt.

7. System nach Anspruch 6, **dadurch gekennzeichnet, dass** die Entscheidungsunterstützungseinheit (40) Entscheidungsvorschläge bei der Instandhaltungs- und Investitionsplanung des Wasserversorgungsnetzes und/oder diesbezüglicher Betriebsmittel erarbeitet, indem kostenoptimale Instandhaltungs- und Austauschstrategien ermittelt werden ausgehend von Kosten-Informationen aus einem ERP-System, Kundenanfragen, elektronischen Instandhaltungsberichten, Leckage- und Rohrbruch-Kenntnissen aus der Lekkage-Detektionseinheit (42), Lebensdauerberechnungen und zusätzlichen Informationen aus dem Feld sowie Erfahrungswerten.

8. System nach einem der vorherigen Ansprüche, **dadurch gekennzeichnet, dass** die Ergebnisse der Einsatzplanung als Zeitreihen an das Informationsmanagementsystem übertragbar und dort speicherbar sind.

9. System nach Anspruch 2, **dadurch gekennzeichnet, dass** auftretende Alarme in dem Geographischen Informationssystem ebenso angezeigt werden wie in einer Prozessgrafik.

10. System nach Anspruch 3, **dadurch gekennzeichnet, dass** bestätigte Fehlermeldungen aus der Alarm-Managementeinheit (34) automatisch in das Modell des Wasserversorgungsnetzes eingearbeitet werden, so dass immer ein realitätsnahes Modell zur Verfügung steht.

11. System nach einem der vorherigen Ansprüche, **dadurch gekennzeichnet, dass** die Integrationseinrichtung (14) über eine Integrationseinheit verfügt, über welche die Bedienoberflächen beziehungsweise Bedienelemente der verschiedenen Funktionseinheiten und Anwendungen eingebunden sind, so dass eine direkte Sicht auf die jeweilige Anwendung und/oder Funktionseinheit aus der Integrationseinrichtung heraus möglich ist und direkt in der jeweiligen Anwendung und/oder Funktionseinheit gearbeitet werden kann.

## Claims

1. System for determining and/or processing state information relating to a water supply grid having at least one central data processing device, a management system (12), at least one integration device (14), an information management system (26) and functional units, wherein
• the functional units ascertain and provide state information,
• the integration device (14) prompts integration of the functionality of the functional units (42, 38, 52, 30 ...) into the management system (12) such that the management system functionality is extended by the functionality of the respective functional unit and individual functions and/or the functionality of the functional units is/are accessed from the integration device (14), and
• the information management system (26) in conjunction with the integration device (14), the management system (12) and the functional units (42, 38, 52, 30 ...) acts as a central database by prompting continuous data and information interchange between the management system and the functional units, wherein the functional units can access data and information of other integrated functional units,
**characterized in that** the functional units include:
• an action planning unit (30) for optimum actuation of pumps that are used to produce the flow and pressure in the water supply grid,
• a prediction unit (32) for providing a locally resolved estimate of the future water consumption in the water supply grid,
• an alarm management unit (34) for delivering fault reports from pumps or valves, or for reporting a leak in a line section or a grid section,
• a fault compensation unit (44) that provides one or more solution proposals for fault correction when faults occur in the system on a database and/or rule basis, in conjunction with the action planning unit (30), the respective fault being corrected by means of automatic execution of commands by the fault compensation unit (44) connected to the management system (12) or by the management system itself, and
• a visual display unit (52) comprising functional options for the presentation of geographical data and for the visual display of various states of the system, which communicates with the respective functional unit and the application thereof, transmits selections by a user to the application and responses and results from the respective application to a user, and visually displays temporally and locally conditioned information and data, wherein
• the estimate of the future water consumption is used as a basis for the optimization method of the action planning unit,
• the fault reports or the report of a leak are taken into account in the pump actuation optimization algorithm and there is an appropriate reaction thereto by virtue of faulty pumps no longer being actuated, areas in which there is a faulty pressure regulation valve, particularly when the valve is closed and no longer controllable, being fed using a different strategy than previously, and high pressures in lines with leaks being avoided.

2. System according to Claim 1, **characterized in that** the visual display unit can be used to integrate external applications into an operator environment of the management system, wherein grid states and/or zones with critical states and/or graphically conditioned alarm information can be displayed in a geographical information system (GIS).

3. System according to Claim 1 or 2, **characterized in that** a simulation unit (38) is provided that provides a model of the water supply grid that is described using mathematicophysically based rules, for the purpose of determining and/or predicting the pressure and flow that can theoretically be expected in the water supply grid on the basis of the present supply of water and the present or estimated water consumption at the individual nodes, with confirmed fault reports from the alarm management unit (34) being able to be incorporated into the model automatically.

4. System according to one of the preceding claims, **characterized in that** a module for identifying and localizing leaks (42) is provided that identifies and localizes imminent leaks and pipe fractures in the water supply grid at an early stage on the basis of locally resolved online measured values, wherein the seriousness is characterized and the fault is localized by using a water distribution model and a scenario manager, which allow different leak scenarios to be simulated, inter alia.

5. System according to one of the preceding claims, **characterized in that** a pressure regulation unit for bringing about optimum pressure conditions in the water supply grid by virtue of optimized actuation of pressure regulation valves is provided, wherein the pressure regulation unit ascertains a target opening value, which is optimized from the point of view of power aspects, on the basis of an optimized pump schedule, predetermined by the action planning unit, and/or the estimated water demand and/or a prevailing pressure for each pressure regulation valve.

6. System according to one of the preceding claims, **characterized in that** a decision support unit (40) is provided that performs risk-based assessment and/or weighting and/or prioritization of the pending alarms, and forwards the alarms deemed to be relevant or important to the alarm management unit (34).

7. System according to Claim 6, **characterized in that** the decision support unit (40) develops decision proposals for the maintenance and investment planning for the water supply grid and/or resources in this regard by ascertaining maintenance and replacement strategies that are optimum in terms of cost on the basis of cost information from an ERP system, customer queries, electronic maintenance reports, leak and pipe fracture knowledge from the leak detection unit (42), service life calculations and additional information from the field and also empirical values.

8. System according to one of the preceding claims, **characterized in that** the results of the action planning can be transferred to the information management system and stored therein as time series.

9. System according to Claim 2, **characterized in that** alarms that occur are displayed in a geographical information system in the same way as in process graphics.

10. System according to Claim 3, **characterized in that** confirmed fault reports from the alarm management unit (34) are automatically incorporated into the model of the water supply grid, so that a realistic model is always available.

11. System according to one of the preceding claims, **characterized in that** the integration device (14) has an integration unit that is used to incorporate the operator interfaces or operator elements of the various functional units and applications, so that a direct view of the respective application and/or functional unit from the integration device is possible and can be processed directly in the respective application and/or functional unit.

## Revendications

1. Système pour déterminer et/ou traiter des informations d'état concernant un réseau de distribution d'eau, comportant au moins un dispositif centralisé de traitement des données, un système de pilotage (12), au moins un dispositif d'intégration (14), un système de gestion d'informations (26), ainsi que des unités fonctionnelles, dans lequel
• les unités fonctionnelles déterminent et fournissent des informations d'état,
• le dispositif d'intégration (14) assure une intégration de la fonctionnalité des unités fonctionnelles (42, 38, 52, 30...) dans le système de pilotage (12) de manière à ce que la fonctionnalité du système de pilotage soit élargie avec la fonctionnalité de l'unité fonctionnelle respective et qu'un accès à des fonctions individuelles et/ou à la fonctionnalité des unités fonctionnelles s'effectue à partir du dispositif d'intégration (14), et
• le système de gestion d'informations (26) agit en tant que base de données centralisée en association avec le dispositif d'intégration (14), le système de pilotage (12) et les unités fonctionnelles (42, 38, 52, 30...) en assurant un échange continu de données et d'informations entre le système de pilotage et les unités fonctionnelles, dans lequel les unités fonctionnelles peuvent accéder à des données et à des informations d'autres unités fonctionnelles intégrées,
**caractérisé en ce que** les unités fonctionnelles comportant :
• une unité de planification de mise en oeuvre (30) destinée à une commande optimale de pompes qui sont mises en oeuvre pour produire le débit et la pression dans le réseau de distribution d'eau,
• une unité de prédiction (32) destinée à délivrer une estimation résolue spatialement de la consommation d'eau future dans le réseau de distribution d'eau,
• une unité de gestion d'alarme (34) destinée à délivrer des messages de perturbation de pompes ou de vannes ou à signaler une fuite dans une section de conduite ou une section de réseau,
• une unité de correction d'erreur (44) qui fournit une ou plusieurs propositions de solution de correction d'erreur au moyen d'une base de données et/ou de règles en cas d'erreur se produisant dans le système en association avec l'unité de planification de mise en oeuvre (30), dans lequel l'erreur respective est éliminée par exécution automatique d'instructions par l'unité de correction d'erreur (44) raccordée au système de pilotage (12) ou par le système de pilotage lui-même, et
• une unité de visualisation (52) comprenant des capacités fonctionnelles permettant de représenter des données géographiques et de visualiser différents états du système, qui communique avec l'unité fonctionnelle respective et avec son application, qui transmet des objectifs d'un utilisateur à l'application et des réponses et des résultats de l'application respective à un utilisateur et qui visualise temporellement et spatialement des informations et des données traitées, dans lequel
• l'estimation de la consommation d'eau future est utilisée en tant que base pour le processus d'optimisation de l'unité de planification de mise en oeuvre,
• les messages de perturbation ou le signalement d'une fuite sont pris en compte dans l'algorithme d'optimisation de la commande de pompe et, en réponse à cela, il est fait en sorte que des pompes défectueuses ne pouvant plus être commandées, et que des domaines dans lesquels une vanne de régulation de pression défectueuse est présente, notamment de telle manière que la vanne soit fermée et ne puisse plus être commandée, soient alimentées avec une autre stratégie qu'auparavant, et d'éviter une forte pression dans les conduites présentant des fuites.

2. Système selon la revendication 1, **caractérisé en ce que** des applications externes peuvent être intégrées à un environnement d'exploitation du système de pilotage au moyen de l'unité de visualisation, dans lequel des états du réseau et/ou des zones se trouvant dans des états critiques et/ou des informations d'alarme préparées de manière graphique, peuvent être affichés dans un système d'information géographique (GIS).

3. Système selon la revendication 1 ou 2, **caractérisé en ce qu'**il est prévu une unité de simulation (38) qui fournit un modèle du réseau de distribution d'eau décrit à partir de règles mathématiques et physiques pour déterminer et/ou prédire la pression et le débit devant être attendus en théorie dans le réseau de distribution d'eau en fonction de l'alimentation en eau actuelle et de la consommation d'eau actuelle ou estimée en des points nodaux individuels, dans lequel des messages d'erreur confirmés provenant de l'unité de gestion d'alarme (34) sont automatiquement incorporés au modèle.

4. Système selon l'une quelconque des revendications précédentes, **caractérisé en ce qu'**il est prévu un module d'identification et de localisation de fuites (42) qui identifie et localise des fuites et des ruptures de canalisations imminentes dans le réseau de distribution d'eau à partir de valeurs de mesure en ligne spatialement résolues de manière précoce, dans lequel, pour caractériser la gravité et pour localiser le défaut, on utilise un modèle de distribution d'eau et un gestionnaire de scénario au moyen desquels il est entre autres possible de simuler des scénarios de fuite.

5. Système selon l'une quelconque des revendications précédentes, **caractérisé en ce qu'**il est prévu une unité de régulation de pression destinée à obtenir des rapports de pression optimaux dans le réseau de distribution d'eau en optimisant la commande de vannes de régulation de pression, dans lequel l'unité de régulation de pression détermine une valeur nominale d'ouverture optimisée du point de vue énergétique à partir d'un plan d'exploitation des pompes et/ou d'un besoin estimé en eau et/ou d'une pression prédominante pour chaque vanne de régulation de pression, qui sont optimisés et prédéterminés par l'unité de planification de mise en oeuvre.

6. Système selon l'une quelconque des revendications précédentes, **caractérisé en ce qu'**il est prévu une unité d'aide à la prise de décision (40) qui effectue une évaluation et/ou une pondération et/ou une hiérarchisation en fonction du risque des alarmes présentes et qui transmet des alarmes jugées pertinentes ou importantes à l'unité de gestion d'alarme (34).

7. Système selon la revendication 6, **caractérisé en ce que** l'unité d'aide à la prise de décision (40) conceptualise des propositions de décision lors de la planification de coûts de maintenance et d'investissement du réseau de distribution d'eau et/ou des moyens d'exploitation associés en faisant en sorte que des stratégies de maintenance et de remplacement optimales du point de vue des coûts soient obtenues à partir d'informations de coûts provenant d'un système ERP, de demandes émanant des clients, de rapports de maintenance, de connaissances concernant les fuites et les ruptures de canalisation provenant de l'unité de détection de fuite (42), de calculs de durée de vie et d'informations supplémentaires provenant du terrain ainsi que de valeurs empiriques.

8. Système selon l'une quelconque des revendications précédentes, **caractérisé en ce que** les résultats de la planification de mise en oeuvre peuvent être transmis sous la forme de séries temporelles au système de gestion d'informations et y être stockés.

9. Système selon la revendication 2, **caractérisé en ce que** des alarmes qui se produisent sont affichées dans le système d'information géographique ainsi que dans un graphique de processus.

10. Système selon la revendication 3, **caractérisé en ce que** des messages d'erreur confirmés sont automatiquement incorporés au modèle du réseau de distribution d'eau de manière à ce qu'un modèle réaliste soit toujours disponible.

11. Système selon l'une quelconque des revendications précédentes, **caractérisé en ce que** le dispositif d'intégration (14) comporte une unité d'intégration par l'intermédiaire de laquelle les interfaces utilisateurs ou les éléments d'exploitation des différentes unités fonctionnelles sont associés de manière à ce qu'une vue directe de l'application et/ou de l'unité fonctionnelle respective puisse être obtenue à partir du dispositif d'intégration et puisse être directement traitée dans l'application et/ou l'unité fonctionnelle respective.
